# EUROPÄISCHE PATENTSCHRIFT

(11) **EP 1 154 614 B1**
(45) Veröffentlichungstag und Bekanntmachung des Hinweises auf die Patenterteilung: **23.03.2005**
(21) Anmeldenummer: 01110771.1
(22) Anmeldetag: 03.05.2001
(51) Int. Cl.: H04M 1/02, H04B 1/38, H04M 1/18

(54) **Mobilitelefon mit einer HF-Schnittstelle**
Mobile telephone with a radiofrequency interface
Téléphone mobile avec un interface radiofréquence

(30) Priorität: 10.05.2000 DE 10022708
(43) Veröffentlichungstag der Anmeldung: 14.11.2001
(73) Patentinhaber: SIEMENS AKTIENGESELLSCHAFT, 80333 München (DE)
(72) Erfinder: Beeker, Udo, 46509 Xanten (DE); Kremers, Arndt, 52066 Aachen (DE); Voigt, Christian, 46509 Xanten (DE)

(56) Entgegenhaltungen:
- DE-A- 2 222 952
- DE-A- 19 860 198
- US-A- 5 524 284
- US-A- 5 550 324
- US-A- 5 886 297

## Beschreibung

Die vorliegende Erfindung betrifft ein Mobiltelefon mit einer HF-Schnittstelle, wobei die eigentliche HF-Buchse am Boden einer in das Gehäuse des Mobiltelefons hineingehenden Vertiefung angeordnet ist.

Moderne Mobiltelefone werden nicht nur im Büro, im Auto und auf der Strasse, sondern in zunehmendem Maße auch während unterschiedlichster Freizeitaktivitäten benutzt, bei denen die Gefahr besteht, dass Festkörper, Staub und Feuchtigkeit in die Geräte eindringen können.

Ziel der Mobiltelefon-Entwicklung ist es daher, Mobiltelefone zu entwickeln, welche einer IP-Schutzklasse zugeordnet werden können. Die IP(= International Protection)-Schutzklasse klassifiziert die Systeme entsprechend ihres Schutzgrades gegen das Eindringen von Festkörpern, Staub und Feuchtigkeit. Die IP-Bezeichnung besteht aus zwei Ziffern, wobei die erste Ziffer den Schutzgrad gegen Staub und die zweite Ziffer den Schutzgrad gegen Feuchtigkeit angibt. Die erste Ziffer kann von 0 bis 6 und die zweite Ziffer von 0 bis 8 variieren. Dabei entspricht die Ziffer 0 keinem Schutzgrad. Zum Beispiel bedeutet eine 5 als erste Ziffer, dass das Gerät gegen Staub geschützt ist, und eine 6 als erste Ziffer bedeutet, dass das Gerät vollkommen staubdicht ist. Eine 4 als zweite Ziffer besagt, dass das Gerät gegen Spritzwasser geschützt ist, während zum Beispiel eine 5 als zweite Ziffer aussagt, dass das Gerät gegen einen Wasserstrahl geschützt ist.

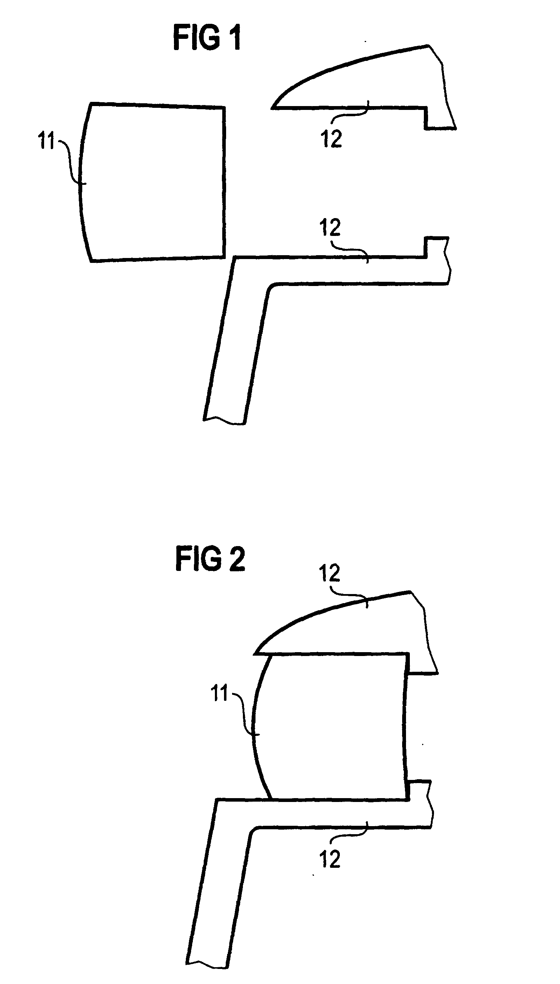

Die Figuren 1 und 2 zeigen eine bekannte Abdichtung einer Hochfrequenz-Schnittstelle bei Mobiltelefonen gegen Staub und Wasser. Die bekannte Abdichtung besteht aus einem Dichtstopfen zum Schutz gegen das Eindringen von gröberem Schmutz. Hierzu wird ein leicht kegliger übermaßbehafteter Gummistopfen 11 verwendet, welcher in eine entsprechende Bohrung in der Gehäuseschale 12 eingesteckt wird. Dieses Konzept eignet sich jedoch nicht zum Schutz gegen Wasser, da Kapillaren entstechen, durch die sich das Wasser hereinzieht.

Dokument US-A-5 524 284 beschreibt ein Mobiltelefon, dessen HF-Schnittstel abgedeckt ist. Das Eindringen von Wasser durch den Kapillareffekt wird jedoch nicht verhindert.

Aufgabe der vorliegenden Erfindung ist es, ein Mobiltelefon mit einer Hochfrequenz-Schnittstelle anzugeben, bei welcher die Schnittstelle derart abgedichtet ist, dass eine hohe IP-Schutzklasse erreicht wird.

Diese Aufgabe wird erfindungsgemäß für das eingangs genannte Mobiltelefon dadurch gelöst, dass ein Dichtstopfen vorgesehen ist, dessen äußere Form der Vertiefung angepasst ist und welcher in dem im eingesteckten Zustand nach außen weisenden Bereich mindestens eine umlaufende Dichtlippe aufweist und in dem im eingesteckten Zustand der HF-Buchse gegenüberliegenden Bereich mindestens zwei Rasthaken aufweist, deren Gegenrastelemente an entsprechenden Positionen in der Vertiefung angeordnet sind.

Bei dem erfindungsgemäßen Mobiltelefon ist eine sichere Abdichtung der HF-Schnittstelle im nicht benutzten Zustand gegeben.

Weitere zweckmäßige Weiterbildungen und Ausgestaltungen der Erfindung ergeben sich aus den Unteransprüchen, sowie aus der nachfolgenden Beschreibung eines Ausführungsbeispiels anhand der Zeichnung.

Es zeigen
- Figur 1: eine Querschnittsansicht einer bekannten Abdichtung einer HF-Schnittstelle vor der Einführung des Dichtstopfens,
- Figur 2: eine Querschnittsansicht einer bekannten Abdichtung nach Figur 1 nach Einführung des Dichtstopfens,
- Figur 3: eine Querschnittsansicht einer Abdichtung einer HF-Schnittstelle gemäß der vorliegenden Erfindung vor dem Einführen des Dichtstopfens, und
- Figur 4: eine Querschnittsansicht einer Abdichtung einer HF-Schnittstelle gemäß der vorliegenden Erfindung nach Figur 3 im eingeführten Zustand des Dichtstopfens.

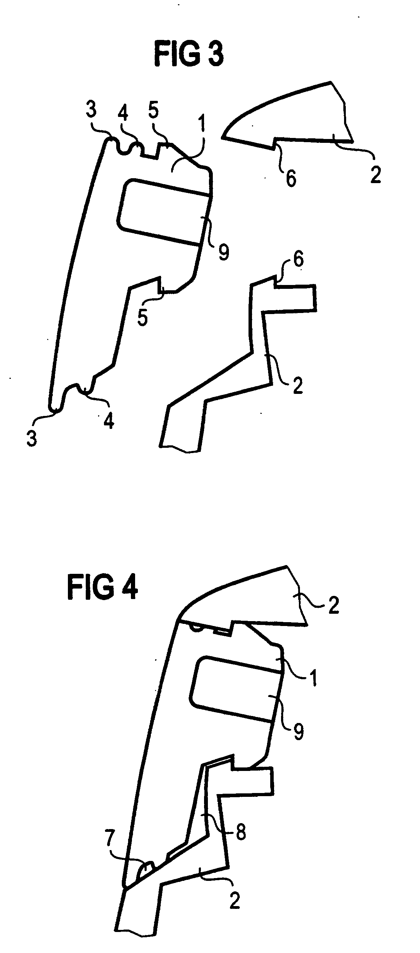

In den Figuren 3 und 4 ist eine erfindungsgemäße Abdichtung einer Hochfrequenz-Schnittstelle bei Mobilfunkgeräten gegen Wasser und Staub dargestellt. Das eigentliche Steckverbinderteil der HF-Schnittstelle ist hier der Einfachheit halber nicht dargestellt, da es auch nicht erfindungswesentlich ist. Erfindungswesentlich ist, dass eine HF-Schnittstelle in einer Gehäuseschale 2 eine Öffnung benötigt, welche abgedichtet werden muss.

Der erfindungsgemäße Dichtstopfen übernimmt bei der erfindungsgemäßen Lösung zwei Funktionen, nämlich Befestigen des Stopfens in der Öffnung der Gehäuseschale 12 und Abdichten der Öffnung in der Gehäuseschale 12.

Dazu besitzt der erfindungsgemäße Dichtstopfen 1 in dem der Gehäuseschale 2 zugewandten Bereich Rasthaken 5. Im Öffnungsbereich der Gehäuseschale 12 sind entsprechende Gegenstücke, welche als Rastelemente 6 bzw. als Hinterschnitte ausgebildet sind. Mit Hilfe der durch die Elemente 5 und 6 sich ergebende Verrastung wird der Dichtstopfen in der Gehäuseschale 2 fixiert.

In seinem nach aussen weisenden Randbereich weist der Dichtstopfen 1 umlaufende Dichtlippen 3, 4 auf. Diese Dichtlippen 3, 4 wirken als integrierte O-Dichtungsringe. Die Dichtlippen 3, 4 sind umlaufend und bilden nach Einführen des Dichtstopfens 1 in die Öffnung der Gehäuseschale 2 zwei Sperrhohlräume 7 und 8, nämlich einen äusseren Sperrhohlraum 7 und einen inneren Sperrhohlraum 8. Durch diese Hohlräume wird ein Kapillareffekt vermieden und ein sicherer Schutz gegen das Eindringen von Wasser erreicht.

Mit Hilfe der vorher beschriebenen Verrastung wird die nötige Dichtkraft auf die zwei Dichtlippen 3, 4 aufgebracht, die jeweils entlang einer Linienkontur den Schnittstellenbereich abdichten.

## Patentansprüche

1. Mobiltelefon mit einer HF-Schnittstelle, wobei die eigentliche HF-Buchse am Boden einer in das Gehäuse des Mobiltelefons hineingehenden Vertiefung angeordnet ist,
**dadurch gekennzeichnet,**
**dass** ein Dichtstopfen (1) vorgesehen ist, dessen äußere Form der Vertiefung angepasst ist und welcher in dem im eingesteckten Zustand nach außen weisenden Bereich mindestens eine umlaufende Dichtlippe (3, 4) aufweist und in dem im eingesteckten Zustand der HF-Buchse gegenüberliegenden Bereich mindestens zwei Rasthaken (5) aufweist, deren Gegenrastelemente (6) an entsprechenden Positionen in der Vertiefung angeordnet sind.

2. Mobiltelefon nach Anspruch 1,
**dadurch gekennzeichnet,**
**dass** der nach außen weisende Bereich des Dichtstopfens (1) der Gehäuseoberfläche angepasst ist.

3. Mobiltelefon nach Anspruch 1 oder 2,
**dadurch gekennzeichnet,**
**dass** der Dichtstopfen (1) im Bereich der Rasthaken (5) ein zentral angeordnetes Sackloch (9) aufweist.

4. Mobiltelefon nach einem der vorhergehenden Ansprüche,
**dadurch gekennzeichnet,**
**dass** die Vertiefung im Wesentlichen eine sich nach innen hin verjüngende kegelstumpfförmige Vertiefung ist und die Form des Dichtstopfens (1) daran angepasst ist.

## Claims

1. Mobile telephone with an HF interface, the actual HF jack being arranged on the bottom of a depression in the housing of the mobile telephone,
**characterised in that**
a sealing plug (1) is provided, the outer form of which is matched to the depression and which in the area facing outwards when plugged in has at least one circumferential sealing lip (3, 4) and in the area opposite the HF jack when plugged in has at least two latching hooks (5), the counter-latching elements (6) of which are arranged at corresponding positions in the depression.

2. Mobile telephone in accordance with Claim 1,
**characterised in that**
the outwards-facing area of the sealing plug (1) is matched to the surface of the housing.

3. Mobile telephone in accordance with Claim 1 or 2,
**characterised in that**
the sealing plug (1) has a centrally arranged blind hole (9) in the area of the latching hooks (5).

4. Mobile telephone in accordance with one of the preceding claims,
**characterised in that**
the depression is essentially a depression in the form of a truncated cone tapering inwards and the form of the sealing plug (1) is matched thereto.

## Revendications

1. Téléphone mobile avec une interface HF, la prise HF proprement dite étant située au fond d'un creux rentrant dans le boîtier du téléphone mobile,
**caractérisé en ce que**
l'on prévoit un bouchon étanche (1) dont la forme extérieure est adaptée au creux et dont la zone dirigée vers l'extérieur, lorsqu'il est enfoncé, est pourvue d'au moins une lèvre d'étanchéité (3, 4) périphérique, et qui est pourvu, dans la zone opposée à la prise HF lorsqu'il est enfoncé, d'au moins deux crochets d'enclenchement (5) dont les éléments de contre-enclenchement (6) sont situés à des positions correspondantes dans le creux.

2. Téléphone mobile selon la revendication 1,
**caractérisé en ce que**
la zone du bouchon étanche (1) dirigée vers l'extérieur est adaptée à la surface du boîtier.

3. Téléphone mobile selon la revendication 1 ou 2,
**caractérisé en ce que**
le bouchon étanche (1) est pourvu d'un trou borgne (9) situé de manière centrale dans la zone des crochets d'enclenchement (5).

4. Téléphone mobile selon l'une des revendications précédentes,
**caractérisé en ce que**
le creux est essentiellement un creux en forme de cône tronqué qui va en rétrécissant vers l'intérieur et la forme du bouchon étanche (1) est adaptée à celui-ci.
